# EUROPEAN PATENT APPLICATION

(11) **EP 4 206 488 A1**
(43) Date of publication of application: **05.07.2023**
(21) Application number: 22211697.2
(22) Date of filing: 06.12.2022
(51) Int. Cl.: F16F 1/38, F16F 7/108

(54) **VIBRATION ISOLATION SUPPORT DEVICE**

(30) Priority: 30.12.2021 US 202117565734
(71) Applicant: Volvo Car Corporation, 405 31 Göteborg (SE)
(72) Inventor: KLARS, Henrik, 40531 Göteborg (SE)
(74) Representative: Maiwald GmbH

(57) **Abstract**

Isolation of a body of a vehicle from vibrational frequencies introduced via electronic axle drive units vehicle is provided. For example, one or more embodiments described herein can comprise a vibration isolation device (500) for a powertrain of an electric vehicle is provided. The vibration isolation device (500) can comprise an inner core (302, 502) configured to operatively attach to an electronic axle drive unit for an axle of the electric vehicle. The vibration isolation device (500) also can comprise a mass dampener (506) integrated with an insulator (504), resulting in a dual isolation mass (506 and 504) that encircles the inner core (302,502. Further, the vibration isolation device (500) can comprise an outer sleeve (306) that encircles the dual isolation mass (506 and 504) and the inner core (302,502).

## Description

### TECHNICAL FIELD

Embodiments disclosed and claimed herein relate to isolating a body of a vehicle from vibrational frequencies introduced via electronic axle drive units.

### BACKGROUND

Electronic axle drive units are utilized in vehicles to drive axles of the vehicle and facilitate movement of the vehicle. For example, vehicles can include an electronic front axle drive and/or an electronic rear axle drive. During use, various frequencies are generated by the electronic axle drives and from road excitations that are transferred to the body of the vehicle via the electronic axle drives. The components of the vehicle are subject to such frequencies and related noise during operation, which can cause damage to the vehicle. Further, such frequencies and related noise can be transferred to a passenger compartment of the vehicle, which can negatively impact passenger comfort.

### SUMMARY

The following presents a summary to provide a basic understanding of one or more embodiments of the invention. This summary is not intended to identify key or critical elements, or delineate any scope of the particular embodiments or any scope of the claims. Its sole purpose is to present concepts in a simplified form as a prelude to the more detailed description that is presented later. In one or more embodiments described herein, systems, methods, and/or apparatuses that facilitate isolating a body of a vehicle from vibrational frequencies introduced via electronic axle drive units are described.

According to an embodiment, a vibration isolation device for a powertrain of an electric vehicle is provided. The vibration isolation device can comprise an inner core configured to operatively attach to an electronic axle drive unit for an axle of the electric vehicle. The vibration isolation device also can comprise a mass dampener integrated with an insulator, resulting in a dual isolation mass that encircles the inner core. Further, the vibration isolation device can comprise an outer sleeve that encircles the dual isolation mass and the inner core.

According to another embodiment, a method of isolating frequencies caused by an electronic axle drive of an electronic vehicle is provided. The method can comprise forming an integrated dual isolation mass. Forming the integrated dual isolation mass can comprise vulcanizing a mass dampener in an insulator. The method also can comprise inserting the integrated dual isolation mass between an inner core and an outer sleeve. The inner core, the integrated dual isolation mass, and the outer sleeve are arranged coaxially, resulting in an isolation device. Further, the method can comprise operatively attaching the isolation device to the electronic axle drive via a connection means of the inner core.

According to another embodiment an electric vehicle is provided. The electric vehicle can comprise an electronic axle drive unit and a vibration isolation device operatively attached between the electronic axle drive unit and a body of the electric vehicle. The vibration isolation device can comprise an inner core configured to operatively attach to the electronic axle drive unit for an axle of the electric vehicle. The vibration isolation device can also comprise a mass dampener integrated with an insulator, resulting in a dual isolation mass that encircles the inner core. Further, the vibration isolation device can comprise an outer sleeve that encircles the dual isolation mass.

### DESCRIPTION OF THE DRAWINGS

FIG. 1 illustrates an end view of a bushing that comprises a single isolator for use with an electronic rear axle drive.
FIGs. 2A, 2B, and 2C illustrate side perspective views of the respective components of the bushing of FIG. 1.
FIG. 3 illustrates an end view of a bushing that comprises one or more rubber masses for use with an electronic front axle drive.
FIGs. 4A, 4B, and 4C illustrate side perspective views of the respective components of the bushing of FIG. 3.
FIG. 5 illustrates an end view of an example, non-limiting, vibration isolation device in accordance with one or more embodiments described herein.
FIGs. 6A, 6B, 6C, and 6D illustrate side perspective views of the respective components of the example, non-limiting, vibration isolation device of FIG. 5 in accordance with one or more embodiments described herein.
FIG. 7 illustrates a flow diagram of an example, non-limiting, method that isolates frequencies caused by an electronic axle drive of an electronic vehicle in accordance with one or more embodiments described herein.

### DETAILED DESCRIPTION

The following detailed description is merely illustrative and is not intended to limit embodiments and/or application or uses of embodiments. Furthermore, there is no intention to be bound by any expressed or implied information presented in the preceding Background or Summary sections, or in the Detailed Description section.

Power train mounts of a vehicle provide an isolation function and a mounting function. The isolation function of the power train mounts is to isolate the body of the vehicle from electronic axle drives (e.g., an electronic rear axle drive, an electronic front axle drive) and from road excitations. The mounting function of the power train mounts is to mount the electronic axle drives in the vehicle.

Electric vehicles (e.g., battery electric vehicles) can experience various frequencies, including high frequencies due to the electronic components of the vehicle. The high frequencies can be frequencies over a defined value, such as, for example, 400 Hertz (Hz). Such frequencies can be caused by the electronic components and gear whine of the electronic axle drives. Further, frequencies can be introduced based on contact with the road surface, which can be transferred to the vehicle via the electronic axle drives. Therefore, a focus of the disclosed embodiments is to provide frequency isolation through the use of a dual isolation support device.

The disclosed embodiments provide dual isolation without the use of an external vibration dampener, which can be heavy, thus, increasing the weight of the vehicle. An external vibration damper can also be expensive, which increases costs associated with the vehicle. Further, the disclosed embodiments provide dual isolation without the use of bushings at attachment points, which can contribute to increased costs.

One or more embodiments are now described with reference to the drawings, wherein like referenced numerals are used to refer to like elements throughout. In the following description, for purposes of explanation, numerous specific details are set forth in order to provide a more thorough understanding of the one or more embodiments. It is evident, however, in various cases, that the one or more embodiments can be practiced without these specific details.

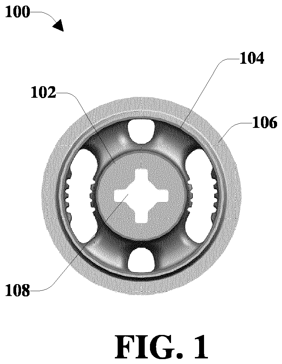

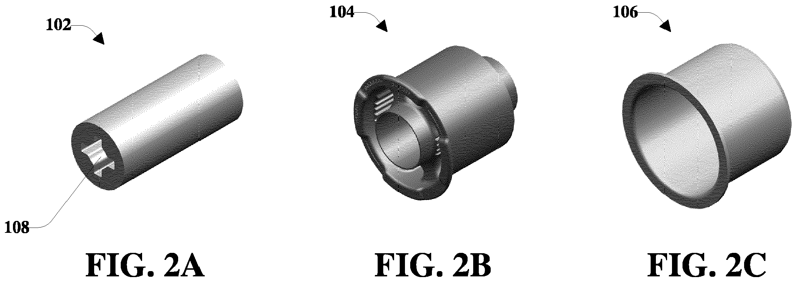

FIG. 1 illustrates an end view of a bushing 100 that comprises a single isolator for use with an electronic rear axle drive. FIGs. 2A, 2B, and 2C illustrate side perspective views of the respective components of the bushing 100 of FIG. 1. The bushing 100 includes an inner core 102 (FIG. 2A), a main rubber element 104 (FIG. 2B), and an outer sleeve 106 (FIG. 2C). Specifically, FIG. 1 illustrates the inner core 102 surrounded by the main rubber element 104. The inner core 102 and the main rubber element 104 are encased within the outer sleeve 106.

The inner core 102 comprises a connection point 108, which allows the assembled electronic axle drive bushing to be operatively attached to an electronic axle drive of a vehicle. The inner core 102 can be formed of metal. According to an implementation, the metal can be extruded aluminum. The inner core 102 is fabricated to withstand clamp load from a screw or other attachment means when operatively attached to the electronic axle drive via the connection point 108. Further, the inner core 102 is configured (or designed) to conform with a configuration of the main rubber element 104.

The main rubber element 104 operates as an insulator and can be formed of natural rubber. The formation of the main rubber element 104 is specified to fulfill requirements associated with various attributes of the vehicle. Such attributes can include, but are not limited to NVH (Noise, Vibration, and Harshness), ride, driveability, durability, and so on. The shape of the main rubber element 104 is determined based on the attribute requirements.

The outer sleeve 106 is formed of plastic or extruded aluminum. According to some implementations, the outer sleeve 106 can comprise nylon or polyamide (e.g., a polymer). In an example, the outer sleeve 106 can comprise polyamide 66 (PA66).

The bushing 100 can comprise a single isolator. Therefore, the bushing 100 provides limited isolation from vibrational frequencies but is not configured to isolate both low and high frequencies transferred to the vehicle body via the electronic axle drive.

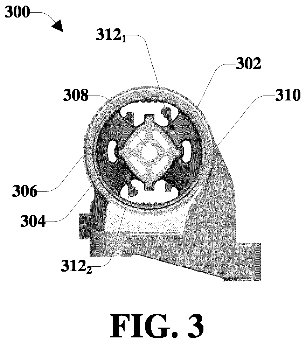

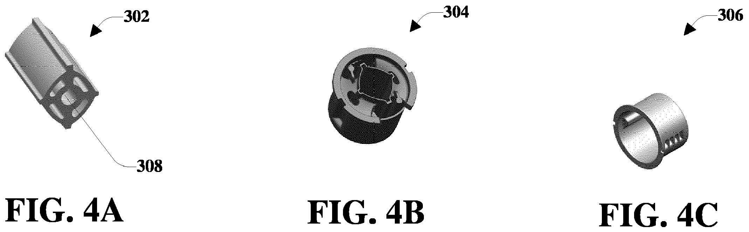

FIG. 3 illustrates an end view of a bushing 300 that comprises one or more rubber masses for an electronic front axle drive. FIGs. 4A, 4B, and 4C illustrate side perspective views of the respective components of the bushing 300 of FIG. 3.

The bushing 300 includes an inner core 302 (FIG. 4A), a main rubber element 304 (FIG. 4B), and an outer sleeve 306 (FIG. 4C). Specifically, FIG. 3 illustrates the inner core 302 surrounded by the main rubber element 304. Further, the inner core 302 and the main rubber element 304 are encased within the outer sleeve 306.

The inner core 302 comprises a connection point 308, which allows the bushing 300, as assembled, to be operatively attached to an electronic axle drive of a vehicle. The inner core 302, also referred to as an insert, can be formed of metal, such as, for example, extruded aluminum. The inner core 302 is fabricated to withstand clamp load from a screw or other attachment means when operatively attached to the electronic axle drive via the connection point 308. Further, the inner core 302 is configured (or designed) to conform with a configuration of the main rubber element 304.

The main rubber element 304 operates as an insulator and can be formed of natural rubber. The formation of the main rubber element 304 is specified to fulfill requirements associated with various attributes including, for example, NVH, ride, driveability, durability, and so on). The shape of the main rubber element 304 is determined based on the attribute requirements.

The outer sleeve 306 can be formed of extruded aluminum, for example. In an implementation, the outer sleeve 306 can comprise nylon or polyamide. In an example, the outer sleeve 306 can comprise PA66. The outer sleeve 306 (which includes the inner core 302 and the main rubber element 304) is press fitted to a bracket 310.

As indicated in FIG. 3, the main rubber element 304 includes one or more rubber masses, illustrated as a first mass 312₁ and a second mass 312₂. The one or more rubber masses (e.g., the first mass 312₁ and the second mass 312₂) contain only rubber and are configured to produce properties of a vibration damper. However, such rubber elements are limited in the amount of vibrational frequencies that can be isolated. Further, the bushing 300 is not configured to isolate both low and high frequencies transferred to the vehicle body via the electronic axle drive.

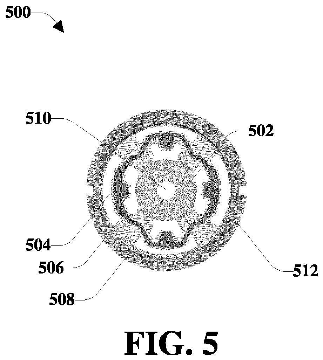

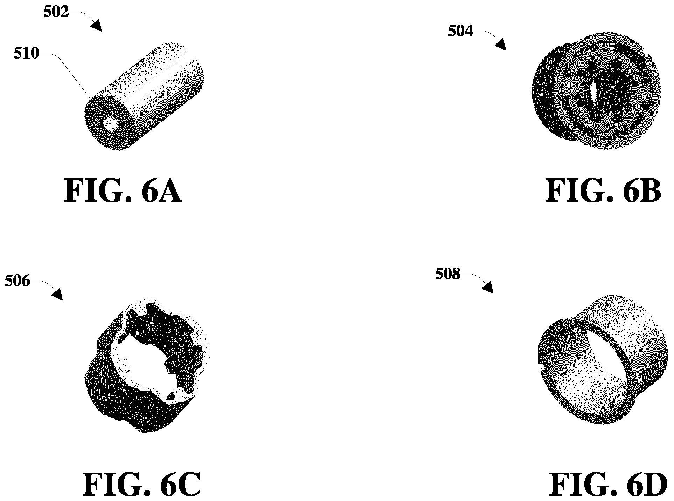

FIG. 5 illustrates an end view of an example, non-limiting, vibration isolation device 500 in accordance with one or more embodiments described herein. FIGs. 6A, 6B, 6C, and 6D illustrate side perspective views of the respective components of the example, non-limiting, vibration isolation device 500 of FIG. 5 in accordance with one or more embodiments described herein.

The vibration isolation device 500 can be, for example, a powertrain mount dual isolated bushing. The vibration isolation device 500 comprises various components including an inner core 502 (FIG. 6A), an insulator 504 (FIG. 6B), a mass dampener 506 (FIG. 6C), and an outer ring 508 (FIG. 6D). Specifically, FIG. 5 illustrates the inner core 502 surrounded by the insulator 504, where the mass dampener 506 is integrated within the insulator 504, resulting in a dual isolation mass. The dual isolation mass is encased within the outer ring 508 (also referred to as an outer sleeve).

The inner core 502 (e.g., insert) is configured to operatively attach to an electronic axle drive unit for an axle of the electric vehicle. The inner core 502 can be fabricated from steel. According to implementation, the inner core 502 can comprise aluminum or extruded aluminum, for example. As illustrated, the inner core 502 comprises a connection point or attachment means 510, which allows the vibration isolation device 500, as assembled, to be operatively attached to the electronic axle drive. For example, the inner core 502 is fabricated to withstand clamp load from a screw or other attachment means when operatively attached to the electronic axle drive. Further, the inner core 502 is configured (or designed) to conform with a configuration of the insulator 504.

The insulator 504 can be made of natural rubber and can also be referred to as a rubber element or main rubber element. The selection of the natural rubber and shape of the insulator 504 can be based on fulfilling requirements of one or more attributes. Such attributes are based on the vehicle configuration as well as considerations related to NVH, ride, driveability, durability, and so on.

The mass dampener 506 can be made from aluminum, extruded aluminum, or another material. The mass dampener 506 is configured to enhance high frequency isolation. The mass dampener 506 facilitates isolation of high frequencies generated by the electronic axle drive unit. For example, the mass dampener 506 is configured to decrease noise and vibration caused by the electronic axle drive unit. The electronic axle drive unit is an electronic rear axle drive unit and/or an electronic front axle drive unit.

To integrate the mass dampener 506 with the insulator 504 (resulting in a dual isolation mass), the mass dampener 506 can be inserted into the insulator 504 and undergo a vulcanization process. After the vulcanization process, the insulator 504 fully encases the mass dampener 506. For example, the mass dampener 506 can be over molded with rubber from the insulator 504 such that the mass dampener 506 is completely surrounded by the material of the insulator 504.

The outer ring 508 can be formed of aluminum or extruded aluminum, for example. According to an implementation, the outer ring 508 can comprise nylon or polyamide. In an example, the outer ring 508 can comprise PA66. The outer ring 508 (which encircles the inner core 502, and the dual isolation mass (e.g., a combination of the insulator 504 and the mass dampener 506 combination)) is press fitted to a bracket 512 of the vehicle. The bracket 512 can be formed of steel, such as aluminum, for example. As such, the vibration isolation device 500 is operatively attached between the electronic axle drive unit and a body of the electric vehicle.

The vibration isolation device 500 is configured to isolate a body of an electric vehicle from the electronic axle drive unit and from road excitations. In some implementations, the dual isolation mass is configured to decrease noise and vibration caused by the electronic axle drive unit.

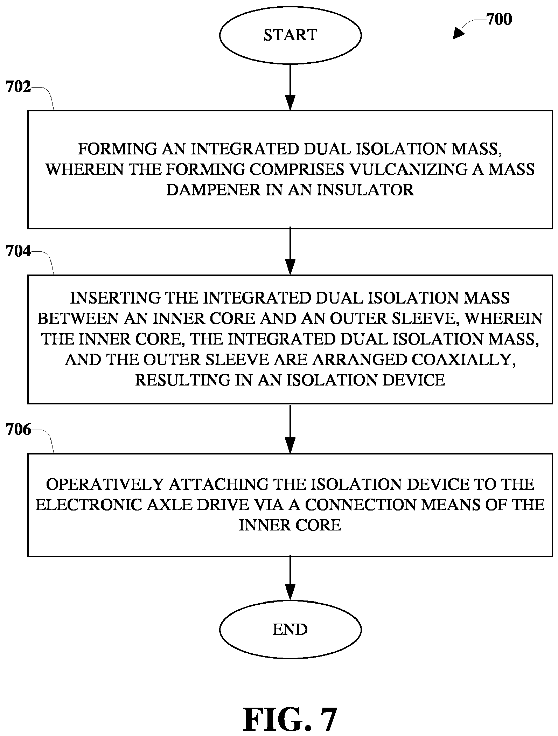

FIG. 7 illustrates a flow diagram of an example, non-limiting, method 700 that isolates frequencies caused by an electronic axle drive of an electronic vehicle in accordance with one or more embodiments described herein.

At 702, an integrated dual isolation mass is formed. Forming the integrated dual isolation mass can comprise vulcanizing a mass dampener in an insulator. The mass dampener can comprise aluminum (although another material can be used for the mass dampener) and the insulator can comprise rubber. Vulcanizing the mass dampener in the isolator can comprise over-molding the mass dampener with the rubber of the insulator. Upon or after vulcanizing, the mass dampener is completely surrounded (or fully encased) by the insulator.

The method 700 continues, at 704, with inserting the integrated dual isolation mass between an inner core and an outer sleeve. The outer sleeve can comprise extruded aluminum. Upon or after the inserting the integrated dual isolation mass, the inner core, the integrated dual isolation mass, and the outer sleeve are arranged coaxially, resulting in the isolation device.

Further, at 706, the isolation device is operatively attached to the electronic axle drive via a connection means of the inner core. For example, the outer sleeve can be press-fitted to an aluminum bracket of the electronic axle drive.

According to some implementations, forming the integrated dual isolation mass can comprise causing dampening of a first portion of the frequencies via the insulator that comprises the rubber. Dampening of the first portion of the frequencies can comprise isolating low frequency vibrations. Further, forming the integrated dual isolation mass can comprise causing dampening of a second portion of the frequencies via the mass dampener that comprises the aluminum, for example. Dampening of the second portion of the frequencies can comprise isolating high frequency vibrations.

What has been described above include mere examples of systems and methods. It is, of course, not possible to describe every conceivable combination of components or methods for purposes of describing one or more embodiments, but one of ordinary skill in the art can recognize that many further combinations and permutations of these embodiments are possible. The descriptions of the various embodiments have been presented for purposes of illustration, but are not intended to be exhaustive or limited to the embodiments disclosed. Many modifications and variations will be apparent to those of ordinary skill in the art without departing from the scope and spirit of the described embodiments.

Furthermore, to the extent that the terms "includes," "has," "possesses," and the like are used in the detailed description, claims, appendices and drawings such terms are intended to be inclusive in a manner similar to the term "comprising" as "comprising" is interpreted when employed as a transitional word in a claim. The terminology used herein was chosen to best explain the principles of the embodiments, the practical application or technical improvement over technologies found in the marketplace, or to enable others of ordinary skill in the art to understand the embodiments disclosed herein. In addition, the term "or" is intended to mean an inclusive "or" rather than an exclusive "or." That is, unless specified otherwise, or clear from context, "X employs A or B" is intended to mean any of the natural inclusive permutations. That is, if X employs A; X employs B; or X employs both A and B, then "X employs A or B" is satisfied under any of the foregoing instances. Moreover, articles "a" and "an" as used in the subject specification and annexed drawings should generally be construed to mean "one or more" unless specified otherwise or clear from context to be directed to a singular form. As used herein, the terms "example" and/or "exemplary" are utilized to mean serving as an example, instance, or illustration. For the avoidance of doubt, the subject matter disclosed herein is not limited by such examples. In addition, any aspect or design described herein as an "example" and/or "exemplary" is not necessarily to be construed as preferred or advantageous over other aspects or designs, nor is it meant to preclude equivalent exemplary structures and techniques known to those of ordinary skill in the art.

Further aspects of the invention are provided by the subject matter of the following clauses:
1. A vibration isolation device for a powertrain of an electric vehicle, the vibration isolation device comprising:
   an inner core configured to operatively attach to an electronic axle drive unit for an axle of the electric vehicle;
   a mass dampener integrated with an insulator, resulting in a dual isolation mass that encircles the inner core; and
   an outer sleeve that encircles the dual isolation mass and the inner core.
2. The vibration isolation device of claim 1, wherein the mass dampener facilitates isolation of high frequencies generated by the electronic axle drive unit.
3. The vibration isolation device of claim 1, wherein the vibration isolation device is configured to isolate a body of the electric vehicle from the electronic axle drive unit.
4. The vibration isolation device of claim 1, wherein the vibration isolation device is configured to isolate a body of the electric vehicle from road excitations.
5. The vibration isolation device of claim 1, wherein the dual isolation mass is configured to decrease noise and vibration caused by the electronic axle drive unit.
6. The vibration isolation device of claim 1, wherein the mass dampener comprises aluminum, and wherein the insulator comprises rubber.
7. The vibration isolation device of claim 1, wherein the insulator fully encases the mass dampener.
8. The vibration isolation device of claim 1, wherein the inner core comprises aluminum and is configured to withstand clamp load from being operatively attached to the electronic axle drive unit.
9. The vibration isolation device of claim 1, wherein the electronic axle drive unit is one of an electronic rear axle drive unit or an electronic front axle drive unit.
10. A method of isolating frequencies caused by an electronic axle drive of an electronic vehicle, comprising:
   forming an integrated dual isolation mass, wherein the forming comprises vulcanizing a mass dampener in an insulator;
   inserting the integrated dual isolation mass between an inner core and an outer sleeve, wherein the inner core, the integrated dual isolation mass, and the outer sleeve are arranged coaxially, resulting in an isolation device; and
   operatively attaching the isolation device to the electronic axle drive via a connection means of the inner core.
11. The method of claim 10, wherein the vulcanizing the mass dampener in the insulator comprises over-molding the mass dampener with rubber of the insulator.
12. The method of claim 10, wherein the outer sleeve comprises extruded aluminum.
13. The method of claim 10, wherein the outer sleeve is press-fitted to an aluminum bracket of the electronic axle drive.
14. An electric vehicle comprising:
   an electronic axle drive unit, and
   a vibration isolation device operatively attached between the electronic axle drive unit and a body of the electric vehicle, the vibration isolation device comprising:
      an inner core configured to operatively attach to the electronic axle drive unit for an axle of the electric vehicle;
      a mass dampener integrated with an insulator, resulting in a dual isolation mass that encircles the inner core; and
      an outer sleeve that encircles the dual isolation mass.
15. The electric vehicle of claim 14, wherein the mass dampener facilitates isolation of frequencies generated by the electronic axle drive unit.
16. The electric vehicle of claim 14, wherein the inner core is configured to withstand clamp load from being operatively attached to the electronic axle drive unit.
17. The electric vehicle of claim 14, wherein the mass dampener comprises aluminum, and wherein the insulator comprises rubber.
18. The electric vehicle of claim 14, wherein the vibration isolation device is configured to isolate the body of the electric vehicle from excitations caused by contact of the electric vehicle with a road surface.
19. The electric vehicle of claim 14, wherein the dual isolation mass is configured to decrease noise and vibration caused by the electronic axle drive unit.
20. The electric vehicle of claim 19, wherein the electronic axle drive unit is one of an electronic rear axle drive unit or an electronic front axle drive unit.

## Claims

1. A vibration isolation device (500) for a powertrain of an electric vehicle, the vibration isolation device (500) comprising:
an inner core (302, 502) configured to operatively attach to an electronic axle drive unit for an axle of the electric vehicle;
a mass dampener (506) integrated with an insulator (504), resulting in a dual isolation mass (506 and 504) that encircles the inner core (302, 502); and
an outer sleeve (306) that encircles the dual isolation mass (506 and 504) and the inner core (302, 502).

2. The vibration isolation device of claim 1, wherein the mass dampener (506) facilitates isolation of high frequencies generated by the electronic axle drive unit.

3. The vibration isolation device of any of claims 1 and 2, wherein the vibration isolation device (506) is configured to isolate a body of the electric vehicle from the electronic axle drive unit.

4. The vibration isolation device of any of claims 1-3, wherein the vibration isolation device (500) is configured to isolate a body of the electric vehicle from road excitations.

5. The vibration isolation device of any of claims 1-4, wherein the dual isolation mass (506 and 504) is configured to decrease noise and vibration caused by the electronic axle drive unit.

6. The vibration isolation device of any of claims 1-5, wherein the mass dampener (506) comprises aluminum, and wherein the insulator (504) comprises rubber.

7. The vibration isolation device of any of claims 1-6, wherein the insulator (504) fully encases the mass dampener (506).

8. The vibration isolation device of any of claims 1-7, wherein the inner core (302, 502) comprises aluminum and is configured to withstand clamp load from being operatively attached to the electronic axle drive unit.

9. The vibration isolation device of any of claims 1-8, wherein the electronic axle drive unit is one of an electronic rear axle drive unit or an electronic front axle drive unit.

10. An electric vehicle comprising:
a vibration isolation device (500) operatively attached between an electronic axle drive unit and a body of the electric vehicle, the vibration isolation device (500) comprising:
an inner core (302, 502) configured to operatively attach to the electronic axle drive unit for an axle of the electric vehicle;
a mass dampener (506) integrated with an insulator (506), resulting in a dual isolation mass that encircles the inner core (302, 502); and
an outer sleeve (306) that encircles the dual isolation mass (506 and 504).

11. The electric vehicle of claim 10, wherein the mass dampener (506) facilitates isolation of frequencies generated by the electronic axle drive unit.

12. The electric vehicle of any of claims 10 and 11, wherein the inner core (302, 502) is configured to withstand clamp load from being operatively attached to the electronic axle drive unit.

13. The electric vehicle of any of claims 10 to 12, wherein the mass dampener (506) comprises aluminum, and wherein the insulator (506) comprises rubber.

14. The electric vehicle of any of claims 10 to 13, wherein the vibration isolation device (500) is configured to isolate the body of the electric vehicle from excitations caused by contact of the electric vehicle with a road surface.

15. The electric vehicle of claims 11 to 14, wherein the dual isolation mass (506 and 504) is configured to decrease noise and vibration caused by the electronic axle drive unit.
